# EUROPÄISCHE PATENTSCHRIFT

(11) **EP 1 274 524 B1**
(45) Veröffentlichungstag und Bekanntmachung des Hinweises auf die Patenterteilung: **14.09.2005**
(21) Anmeldenummer: 00938440.5
(22) Anmeldetag: 03.07.2000
(51) Int. Cl.: B21D 47/00, B32B 3/28, B60R 13/08

(54) **VERFAHREN ZUM HERSTELLEN EINES AKUSTISCH WIRKSAMEN FOLIENSTAPELS FÜR EINEN FAHRZEUGHITZESCHILD**
METHOD FOR PRODUCING AN ACOUSTICALLY EFFECTIVE STACK OF FILMS FOR A MOTOR VEHICLE HEAT SHIELD
PROCEDE DE FABRICATION D'UNE PILE DE FEUILLES A EFFET ACOUSTIQUE POUR ECRAN THERMIQUE SUR UN VEHICULE A MOTEUR

(30) Priorität: 17.04.2000 CH 756002000
(43) Veröffentlichungstag der Anmeldung: 15.01.2003
(73) Patentinhaber: RIETER AUTOMOTIVE (INTERNATIONAL) AG, 8702 Zollikon (CH)
(72) Erfinder: ZWICK, Evelyn, CH-8123 Ebmatingen (CH); WILDHABER, Alexander, CH-8880 Walenstadt (CH)
(74) Vertreter: Felber, Josef
(86) Internationale Anmeldenummer: PCT/CH2000/000359
(87) Internationale Veröffentlichungsnummer: WO 2001/078917

(56) Entgegenhaltungen:
- WO-A-00/46493
- US-A- 3 225 433
- US-A- 3 227 599
- US-A- 3 668 055
- US-A- 4 092 842

## Beschreibung

Die Erfindung betrifft ein Verfahren zum Herstellen eines Stapels aus geprägten Folienbahnen für ein Fahrzeughitzeschild gemäss Oberbegriff des Anspruchs 1, sowie einen mit diesem Verfahren hergestellten Stapel gemäss Oberbegriff des Anspruchs 6.

Derartige Folienstapel werden beispielsweise als Wärme- oder als Schalldämmung verwendet und bestehen aus mehreren aufeinander liegenden, profilierten Folien, beispielsweise aus Nichteisenmetallen, insbesondere aus Aluminium. Die im folgenden beschriebenen Stapel finden ihre Verwendung vorzugsweise in der Automobilindustrie, insbesondere als schallabsorbierende Isolationspakete oder Hitzeschilde für Fahrzeuge.

Zur Herstellung solcher Stapel werden Flach- oder Blattmaterialien durch ein Prägewalzenpaar geführt, von welchem im allgemeinen eine der Walzen die gewünschte Struktur aufweist, während die andere entweder eine elastische Oberfläche besitzt oder mit einer komplementären Struktur (Negativstruktur) versehen ist. Die Strukturierung/Prägung des Flachmaterials ist mit einer lokalen Dehnung beziehungsweise Streckung des Flachmaterials verbunden. Beispiele derartig vorgenommener Strukturierungen von Flach- oder Blattmaterialien sind dem Fachmann hinlänglich bekannt. Diese Strukturierungen respektive Prägungen können noppen-, wellen- oder rautenförmig sein.

Schallabsorbierende Isolationspakete oder Hitzeschilde, welche insbesondere im Fahrzeug- oder Automobilbau eingesetzt werden, bestehen in der Regel aus mehreren aufeinander angeordneter strukturierter Flach- oder Blattmaterialien, insbesondere in Form von geprägten Folien oder Blechen. Dabei sind die strukturierten Flachmaterialien zur Erzeugung einer Isolationswirkung derart ausgebildet, dass sich Luft- oder Gasvolumina zwischen den einzelnen Lagen bilden können und grossflächige Kontakte zwischen den aufeinander angeordneten Lagen vermieden werden. Die einzelnen Blätter sollten also möglichst weit voneinander beabstandet sein. Um grosse Prägetiefen zu erzielen, werden die Abstände zwischen den einzelnen Verformungen vergrössert, was jedoch zu einer Verminderung der Biegesteifigkeit und Kompressionsfestigkeit führt. Eine derartige Verformung von Flachmaterialien führt also zu dem Nachteil, dass das strukturierte Flachmaterial bereits bei geringerem Flächendruck, der beispielsweise durch ungewollte oder unerwünschte Verpressungen verursacht wird, leicht wieder zusammengedrückt wird und somit die Isolationswirkung verlorengeht. Der geringere Kompressionswiderstand dieser strukturierten Flachmaterialien ist dabei sowohl auf die geringere Anzahl Verformungen pro Flächeneinheit (im folgenden auch Strukturdichte, oder Noppen- respektive Wellendichte genannt) als auch auf die durch die Dehnung respektive Streckung während der Prägung verursachte geringe Dicke des strukturierten Flachmaterials zurückzuführen. Als Folge der verringerten Strukturdichte und der lokal verringerten Materialdicke weisen diese Flachmaterialien eine, für den vorgesehenen Verwendungszweck ungenügende, Steifigkeit im Bereich der einzelnen Verformungen (Noppen, Wellenberge respektive Wellentäler) auf. Dies führt dazu, dass sich beispielsweise bei den bekannten genoppten Flachmaterialien die einzelnen Noppen schon bei geringen Verpressungen wieder glattdrücken respektive in einfacher Weise verformen lassen. Darüber hinaus weisen diese strukturierten Flachmaterialien eine geringe Gesamtbiegefestigkeit auf, da diese im Bereich der einzelnen Noppen einen geringeren Kompressionswiderstand und eine geringere Steifigkeit aufweisen.

Die DE-43'29'411 beschreibt ein Wärme- und Schalldämm-Material aus mehreren profilierten Folien, welche Folien ein wellenförmiges Profil aus parallelen Wellenbergen und Wellentälern aufweisen, wobei in den Wellentälern Zwickel eingefaltet sind. Die Praxis zeigt allerdings, dass diese Folienpakete die Erwartungen der Automobilindustrie nur ungenügend erfüllen. Darüber hinaus zeigt sich, dass die Steifigkeit im Bereich der einzelnen Wellenberge und Wellentäler für die genannte Verwendung nicht ausreichend ist.

Bei den heute bekannten Verfahren zur Herstellung von Folienstapeln wird eine Folienbahn durch ein Walzenpaar geführt und wird die derart geprägte Folienbahn in Stücke geschnitten, welche übereinander abgelegt respektive gestapelt werden. Es sind auch Verfahren bekannt, bei welchen mehrere Walzenpaare gleichzeitig zum Einsatz kommen, die geprägten Folienbahnen übereinander geführt werden und gemeinsam geschnitten werden. Bei all diesen Verfahren kann es vorkommen, dass sich die geprägten Folien ineinander verschachteln, d.h. die einzelnen Prägungen genau übereinander zu liegen kommen und die einzelnen Folien sich deshalb ineinander schieben (analog einem Stapel Sierkartons). Dies führt dazu, dass die einzelnen Folien nicht mehr in vorgesehener Weise voneinander beabstandet sind, sondern dicht aufeinander liegen.

Aus der Druckschrift EP 0 439 046 A1 ist ein Verfahren sowie eine Vorrichtung zum Herstellen eines Folienstapels bekannt, bei welchem mehrere Prägewalzen verwendet werden. Dieses Herstellungsverfahren erweist sich ebenfalls als äusserst aufwendig und ist entsprechend kostenintensiv. Um die Struktur der Folien respektive des Flach- oder Blattmaterials verändern zu können, muss bei dieser Vorrichtung eine Vielzahl von Prägewalzen ausgetauscht werden.

Aus der US 3,668,055 ist auch ein Verfahren bekannt, bei welchem papierartiges Material kontinuierlich durch ein Prägewalzenpaar geführt wird, um eine Noppenstruktur in dieses Material einprägen zu können. Diese Noppenstruktur weist mehrere nebeneinander angeordnete Bereiche mit unterschiedlich orientierten Noppenanordnungen auf. Durch das bereichsweise versetzte Übereinanderlegen der geprägten Materialbahnen wird ermöglicht, dass die einzelnen übereinanderliegenden Materialbahnen voneinander beabstandet bleiben. Das auf diese Weise erzeugte Verpackungsmaterial eignet sich jedoch nicht für die Herstellung von Wärmeisolationsteilen, wie sie im Automobilbau ihre Verwendung finden.

Das kontinuierliche Prägen von metallischen Folienbahnen für die Herstellung von wärmereflektierenden Isolationspaketen wird beispielsweise in der US 4,092,842 beschrieben. Bei diesem Verfahren wird die Folienbahn mittels eines ersten Prägewalzenpaars mit einer ersten feinmaschigen und nicht sehr tiefen Reliefstruktur versehen und anschliessend durch ein zweites Prägewalzenpaar geführt, welches in diese Folienbahn zusätzlich einige wenige tiefe Noppen drückt. Die aus derartigen Folienbahnen gefertigten Wärmeisolationspakete sind äusserst voluminös und auch deshalb für den Automobilbau ungeeignet.

Generell zeigt sich, dass bei allen bekannten, aus geprägten dünnen Folienbahnen gefertigten Wärmeisolationsstapeln die einzelnen Prägungen bei starken und andauernden Vibrationen - wie sie bei der Anwendung im Fahrzeugbereich auftreten - rasch wieder deformiert werden, d.h. zusammenfallen und ihre Funktion als Abstandshalter nicht oder nur ungenügend erfüllen.

Im folgenden soll der Begriff "Folienbahn" verwendet werden, um alle Arten von Blech-, Flach- oder Blattmaterial zu erfassen. Der Begriff "Blätter" soll für alle Arten von gestapeltem Blech-, Flach- oder Blattmaterial verwendet werden, welches aus den bearbeiteten Folienbahnen geschnitten ist. Es versteht sich, dass dieses bahnförmige Material beispielsweise aus behandeltem Papier, geeignetem Kunststoff oder Metall, unperforierten oder perforierten Folien, dünnen Metallblättern oder Metallblechen bestehen kann. Diese Materialien können auch beschichtet sein und/oder geringer Verformungsmuster, Lochungen oder Fissuren aufweisen.

Es ist eine wesentliche Aufgabe der vorliegenden Erfindung, ein kostengünstiges Verfahren sowie eine Vorrichtung zur Herstellung eines Isolationspakets für Fahrzeughitzeschilde zu schaffen, welches eine gute Wärmedämmwirkung und eine gute Schallabsorption aufweist. Darüber hinaus soll dieses Isolationspaket eine hohe Biegefestigkeit und einen hohen Kompressionswiderstand aufweisen.

Es ist eine weitere Aufgabe der vorliegenden Erfindung, eine geprägte Folienbahn zu schaffen, welche die Nachteile der bekannten Folienbahnen nicht aufweist. Insbesondere ist es Aufgabe der vorliegenden Erfindung, eine Folienbahn zu schaffen, welche eine erhöhte Steifigkeit und insbesondere eine erhöhte Biegesteifigkeit und einen erhöhten Kompressionswiderstand aufweist.

Es ist darüber hinaus eine Aufgabe der vorliegenden Erfindung, einen Stapel aus geprägten Folienbahnen zu schaffen, welcher Stapel für die Verwendung als schallabsorbierendes Fahrzeughitzeschild geeignet ist, und bei welchem Stapel die einzelnen Blätter in sicherer Weise voneinander beabstandet liegen bleiben. Insbesondere ist es Aufgabe, einen Stapel zu schaffen, welcher eine erhöhte Biegesteifigkeit und einen erhöhten Kompressionswiderstand aufweist.

Diese Aufgabe wird mit einem Verfahren gemäss Anspruch 1 gelöst. Die Unteransprüche 2 bis 5 betreffen weitere, vorteilhafte Verfahrensschritte. Der erfindungsgemäss hergestellte Stapel weist die Merkmale des Anspruchs 6 auf. Eine bevorzugte Ausführungsform dieses Stapels weist die Merkmale des Unteranspruchs 7 auf.

Die gestellte Aufgabe wird erfindungsgemäss mit einem Verfahren zum Herstellen eines Stapels aus geprägten Folienbahnen gelöst. Dabei werden mindestens zwei ungeprägte Folienbahnen von einer Zuführvorrichtung abgezogen und zwischen mindestens einem.Prägewalzenpaar geprägt, insbesondere genoppt. Die derart geprägten respektive genoppten Folienbahnen werden anschliessend in einer Stapelvorrichtung zu einem Stapel zusammengeführt. Diese Stapelvorrichtung umfasst auch ein Schneidwerkzeug, um die zusammengeführten Folienbahnen in eine gewünschte Länge zu schneiden. Erfindungsgemäss ist zwischen dem Prägewalzenpaar und der Stapelvorrichtung eine Fördervorrichtung vorgesehen, mit deren Hilfe die geprägten Folienbahnen entlang unterschiedlicher Wegstrecken gefördert werden. Diese Fördervorrichtung ist derart ausgebildet, dass zumindest zwei benachbart angeordnete geprägte Folienbahnen unterschiedliche Wegstrecken zurückzulegen haben, bevor diese der Stapelvorrichtung zugeführt werden. Auf Grund der Längenunterschiede der unterschiedlichen Wegstrecken weisen die Prägemuster der verschiedenen Folienbahnen vor der Stapelvorrichtung einen gegenseitigen Versatz auf. In einer bevorzugten Ausführungsform des erfindungsgemässen Verfahrens werden die Folienbahnen mit unterschiedlichen Prägungsmustern versehen. Dabei werden einzelne Noppen geprägt, welche eine Faltenwurfstruktur aufweisen. Diese Faltenwurfstruktur führt dazu, dass die einzelnen Noppen einen erhöhten Kompressionswiderstand aufweisen und die gesamte Folienbahn eine grössere Biegesteifigkeit aufweist. Mit diesem Verfahren lassen sich auch fissurierte Folienbahnen erzeugen, welche akustisch wirksamer sind als unfissurierte Folienbahnen.

Dieses Verfahren weist den Vorteil auf, dass die übereinanderliegenden Bahnen aus Flach- oder Blattmaterial respektive Folienbahnen gemeinsam geprägt werden, vorzugsweise mit einem einzigen Prägewalzenpaar, welches alle übereinanderliegenden Bahnen gleichzeitig prägt. Ein derartiges, gemeinsames Strukturieren bzw. Prägen, unter Verzicht einer Mehrzahl von Prägewalzenpaaren, ist entsprechend kostengünstig. Zudem kann ein Prägungsmuster sehr einfach dadurch geändert werden, dass das Prägewalzenpaar ausgetauscht wird durch ein Prägewalzenpaar mit anderem Prägungsmuster. Insbesondere sind Folienbahnen mit einer Vielzahl unterschiedlicher Prägungsmuster in einfacher Weise herstellbar.

Das erfindungsgemässe Verfahren erlaubt es, übereinander liegende Folienbahnen mit einem gegenseitigen Versatz des Prägungsmusters aufeinander zu stapeln. In einer Weiterbildung des erfindungsgemässen Verfahrens kann die Länge der einzelnen Wegstrecken der Folienbahnen im Bereich der Fördervorrichtung verschieden eingestellt werden. Dadurch wird ein unterschiedlicher Versatz des Prägungsmusters erzielt und können die Folienbahnen in gewünschter Weise gestapelt werden.

Die erfindungsgemässe Vorrichtung zum Herstellen eines Stapels umfasst eine Zuführvorrichtung, ein Prägewalzenpaar, eine Fördervorrichtung und eine Stapelvorrichtung. Mit dieser Vorrichtung werden ungeprägte Folienbahnen von der Zuführvorrichtung dem Prägewalzenpaar zugeführt. Mit dem Prägewalzenpaar werden die zugeführten Folienbahnen in gewünschter Weise geprägt. Erfindungsgemäss sind die Prägewalzen derart ausgestaltet, dass die Folienbahnen mit einer Vielzahl von Noppen versehen werden, derart, dass diese Noppen eine Faltenwurf-ähnlichen Struktur zeigen. In einer bevorzugten Weiterbildung dieser Prägewalzen sind diese derart ausgestaltet, dass die Folienbahnen beim Prägen mit Fissuren versehen werden.

In einer weiteren Ausgestaltung dieser Vorrichtung weist die erste Prägewalze in Umfangsrichtung zwei unterschiedliche Prägungsmuster auf. Die zweite Prägewalze, welche zusammen mit der ersten Prägewalze das Prägewalzenpaar bildet, ist zur ersten Prägewalze gegengleich ausgestaltet, sodass die damit geprägten Folienbahnen in Förderrichtung abwechslungsweise ein erstes und ein zweites Prägungsmuster aufweisen.

In einer bevorzugten Ausgestaltung wird der Versatz des Prägungsmusters der einzelnen geprägten Folienbahnen derart gewählt, dass jeweils zwei im Stapel benachbart angeordnete, geprägte Blätter ein unterschiedliches Prägungsmuster aufweisen, das heisst, dass jeweils das erste Prägungsmuster des einen Blattes auf dem zweiten Prägungsmuster des anderen Blattes zu liegen kommt.

Bei der erfindungsgemässen Vorrichtung sind die Prägungswalzen derart ausgestaltet, dass durch den Prägungssvorgang im Flankenbereich der einzelnen Verformungen, insbesondere Noppen, der Folienbahn eine Faltenwurf-ähnliche Struktur entsteht. Diese Faltenwurfstruktur in den einzelnen Noppenflanken führt dazu, dass die einzelnen Noppen einen erhöhten Kompressionswiderstand zeigen und das gesamte Blattmaterial eine erhöhte Biegesteifigkeit aufweist. Die derart erzeugte Versteifung erlaubt es ausserdem, dünnere Folien verwenden zu können, um analoge physikalische Wirksamkeiten, wie sie mit bekannten Flachmaterialien erzielt werden, zu erhalten. Darüber hinaus erlaubt die durch die Faltenstruktur erhöhte Gesamtfestigkeit die Herstellung grösserer Bauteile ohne ein zusätzliches Träger- oder Stützblech verwenden zu müssen.

Der erfindungsgemäss hergestellte Stapel weist eine Vielzahl geprägter Blätter auf. Diese Blätter sind aus den erfindungsgemäss geprägten und versetzt gestapelten Folienbahnen geschnitten. Es ist ein wesentliches Merkmal dieses Stapels, dass benachbarte Folienbahnen ein unterschiedliches respektive gegenseitig versetztes Prägungsmuster aufweisen. Es ist ein weiteres Merkmal des erfindungsgemäss hergestellten Stapels, dass die Prägungsmuster eine Vielzahl von Verformungen mit einer Faltenwurf-ähnlichen Struktur aufweisen. Eine bevorzugte Weiterbildung dieses Stapels weist fissurierte Blätter auf.

Die Erfindung wird nachfolgend an Hand von Ausführungsbeispielen und mit Hilfe der Figuren beschrieben. Es zeigen:
- Fig. 1: eine schematische Darstellung einer Vorrichtung zum Herstellen eines erfindungsgemässen Folienstapels;
- Fig. 2: eine schematische Darstellung eines erfindungsgemässen Stapels;
- Fig. 3: ein besonderes Ausführungsbeispiel eines Prägewalzenpaars; und
- Fig. 4: Detaildarstellung von einzelnen Noppen.

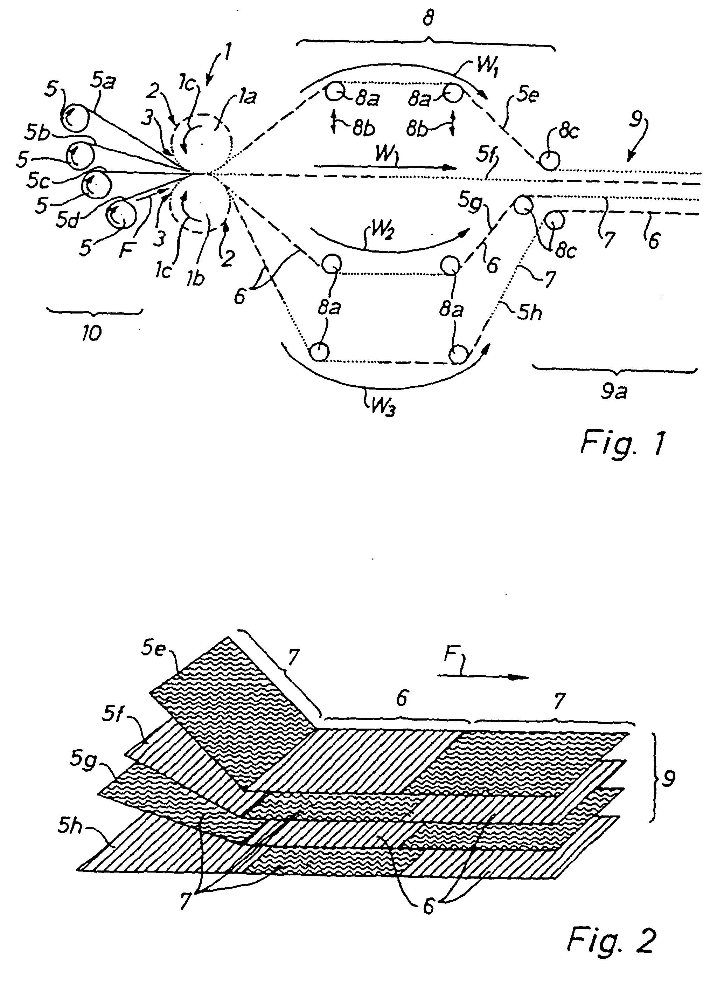

Die in Fig. 1 dargestellte Vorrichtung umfasst eine Zuführvorrichtung 10, in welcher vier übereinander angeordnete Rollen 5 mit aufgerollten Folienbahnen 5a, 5b, 5c, 5d, angeordnet sind. Diese Folienbahnen 5a, 5b, 5c, 5d werden in Förderrichtung F verlaufend von den Rollen 5 abgezogen und übereinander liegend dem Prägewalzenpaar 1 zugeführt. Das Prägewalzenpaar 1 umfasst eine erste Prägewalze 1a sowie eine zweite Prägewalze 1b, welche beide in einer Drehrichtung 1c drehbar gelagert sind. Die erste Prägewalze 1a ist derart ausgestaltet, dass die Oberfläche in Umfangsrichtung über 180° eine erste Struktur 2 und nachfolgend über die weiteren 180° eine zweite Struktur 3 aufweist. Die zweite Prägewalze 1b ist bezüglich der ersten Prägewalze 1a gegengleich ausgestaltet, um die erste Struktur 2 sowie die zweite Struktur 3 zu bilden. Die übereinanderliegenden Bahnen 5a, 5b, 5c, 5d werden gemeinsam geprägt, indem diese gemeinsam vom Prägewalzenpaar 1 strukturiert werden, sodass geprägte Bahnen 5e, 5f, 5g, 5h gebildet werden. Diese Bahnen 5e, 5f, 5g, 5h weisen, bedingt durch die Ausgestaltung des Prägewalzenpaars 1, abwechslungsweise ein erstes Prägungsmuster 6 sowie ein zweites Prägungsmuster 7 auf. Dem Prägewalzenpaar 1 nachfolgend ist eine Vorrichtung 8 zum Verlängern der Wegstrecken angeordnet. Diese Vorrichtung 8 erlaubt es, die Bahnen 5e, 5f, 5g, 5h entlang unterschiedlich langer Wegstrecken W, W1, W2, W3 zu fördern, wobei die Bahn 5f entlang der kürzesten Wegstrecke W gefördert wird, wogegen die Bahnen 5e, 5g, 5h entlang verlängerter Wegstrecken W1, W2, W3 gefördert werden. Der gegenüber der kürzesten Wegstrecke W zusätzliche Weg wird durch die Lage der Umlenkrollen 8a bestimmt. Diese Umlenkrollen 8 können fest angeordnet sein, oder mit Hilfe einer nicht dargestellten Verstellvorrichtung, beispielsweise in Bewegungsrichtung 8b, ansteuerbar verstellbar sein. Die einzelnen Bahnen 5e, 5f, 5g, 5h werden mit Hilfe von Umlenkrollen 8c unter Ausbildung eines Stapels 9 der Stapelvorrichtung 9a zugeführt.

Im dargestellten Ausführungsbeispiel sind die verlängerten Wegstrecken W1, W2, W3 bezüglich der kürzesten Wegstrecke W derart gewählt, dass die Bahnen 5e, 5f, 5g, 5h im Stapel 9, wie in Fig. 2 dargestellt, derart übereinander zu liegen kommen, dass zwei benachbart angeordnete Bahnen 5e, 5f, 5g, 5h jeweils mit parallel versetzten Prägungsmustern 6,7 aufeinander zu liegen kommen.

Der gegenseitige Versatz der Bahnen 5e, 5f, 5g, 5h kann durch entsprechende Wahl der verlängerten Wegstrecken W1, W2, W3 beziehungsweise der Lage der Umlenkrollen 8a, auch anders gewählt sein.

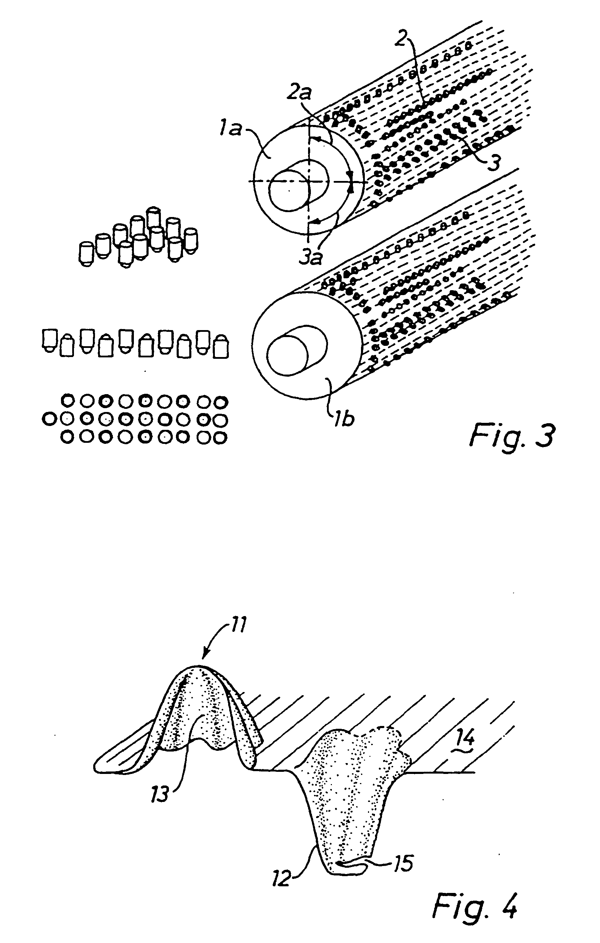

Fig. 3 zeigt eine eine besondere Ausführungsform eines Prägewalzenpaars 1a, 1b. Die Oberfläche der Prägewalze 1a ist derart ausgestaltet, dass sie in Umfangsrichtung über eine Länge 2a von 90° eine erste Noppenanordnung 2, und anschliessend über eine Länge 3a von 90° eine zweite Noppenanordnung 3 aufweist, wobei sich die Anordnungen 2, 3 nochmals wiederholt. Die Prägewalze 1b ist zur Oberfläche der Prägewalze 1a gegengleich ausgestaltet.

Die Prägewalze 1a könnte auch über den gesamten Umfang nur eine erste Noppenanordnung 2 aufweisen. Die damit bewirkte Strukturierung der Bahnen 5e, 5f, 5g, 5h kann derart erfolgen, dass sich Hochlagen und Tieflagen ausbilden, wobei die Bahnen 5e, 5f, 5g, 5h derart in Förderrichtung F versetzt zu einem Stapel 9 zusammengeführt werden, dass jeweils die Tieflagen einer oberen Bahn 5e auf den Hochlagen der unteren Bahn 5f aufliegen. Auch derart kann ein Stapel 9 mit den Bahnen 5e, 5f, 5g, 5h hergestellt werden. In einer weiteren Ausführungsform kann die auf dem gesamten Umfang der Prägewalze 1a ausgebildete Struktur kontinuierlich variieren, derart, dass versetzt übereinander angeordnete Folien nicht dasselbe Prägungsmuster aufweisen.

Fig. 4 macht die Gesaltung der einzelnen Noppen 11 deutlich. Diese Noppen weisen eine steile Flanke 12 auf und zeigen die mit dem vorliegenden Verfahren erzeugte Faltenwurfstruktur 13. Diese Faltenwurfstruktur 13 entsteht, wenn das Blattmaterial 14 bis in den Bereich seiner irreversiblen Streckgrenze gedehnt wird. Es versteht sich, dass diese Streckgrenze auch überschritten werden kann, derart, dass akustisch wirksame Fissuren entstehen. Ein Hitzeschild mit fissurierten Blättern ist in der PCT/CH99/00058 (noch nicht publiziert) beschrieben. Die Lehre dieses Dokumentes soll hier vollumfänglich eingeschlossen sein.

Der Fachmann wird die Noppen und deren Anordnung den akustischen und thermischen Erfordernissen ohne weiteres erfinderisches Dazutun gestalten.

Es versteht sich, dass diese Noppen regelmässig oder unregelmässig angeordnet sein können. Das Prägen erfolgt mit einem entsprechend ausgebildeten Prägewalzenpaar. Die geprägten Folienbahnen werden zu einem Stapel zusammengeführt und liegen nicht nur versetzt, sondern auch sicher beabstandet übereinander.

Die erste Prägewalze kann in Umfangsrichtung auch mehr als zwei unterschiedliche Prägungsmuster aufweisen, beispielsweise drei Prägungsmuster. Die erste Prägewalze kann in Umfangsrichtung auch zwei unterschiedliche Prägungsmuster aufweisen, die sich nur über einen Teilbereich der Prägewalze erstrecken und in Umfangsrichtung mehrfach wiederholt angeordnet sind.

Die Vorteile der vorliegenden Erfindung sind dem Fachmann unmittelbar ersichtlich und sind insbesondere in der erheblichen Vereinfachung des Herstellungsprozesses zu sehen und in der einfachen Möglichkeit, gewünschte akustische und thermische Eigenschaften flexibel wählen zu können. So kann für die Herstellung von akustisch wirksamen Hitzeschilden eine Vorrichtung verwendet werden, bei welcher lediglich ein Prägewalzenpaar benötigt wird. Somit wird eine Änderung der Prägungsmusters oder der Unterhalt dieser Vorrichtung erheblich vereinfacht. Darüber hinaus kann in einfacher Weise eine gezielte Überdehnung der zu prägenden Folienbahn erzielt werden um damit eine gewünschte Faltenwurfstruktur (Versteifung) und/oder Fissurenbildung (Schallabsorption) zu erzielen.

## Patentansprüche

1. Verfahren zum Herstellen eines Stapels (9) aus geprägten Folienbahnen für ein Fahrzeughitzeschild, wobei mindestens zwei ungeprägte Folienbahnen (5a, 5b, 5c, 5d) von einer Zuführvorrichtung (10) in einer Förderrichtung (F) gefördert werden und zwischen mindestens einem Prägewalzenpaar (1) geprägt, insbesondere genoppt, werden, und die geprägten Folienbahnen (5e, 5f, 5g, 5h) anschliessend in einer Stapelvorrichtung (9a) zu einem Stapel (9) zusammengeführt werden, wobei benachbart angeordnete, geprägte Folienbahnen (5e, 5f, 5g, 5h) mit Hilfe einer Fördervorrichtung (8) entlang unterschiedlicher Wegstrecken (W, W1, W2, W3) gefördert werden, derart, dass zumindest zwei im Stapel (9) benachbart angeordnete, geprägte Folienbahnen (5e, 5f, 5g, 5h) auf Grund der Längenunterschiede der unterschiedlichen Wegstrecken (W, W1, W2, W3) einen gegenseitigen Versatz in Förderrichtung (F) aufweisen, **dadurch gekennzeichnet, dass** übereinander liegende, ungeprägte Folienbahnen (5a, 5b, 5c, 5d) während dem Prägen derart gezielt überdehnt werden, dass die geprägten Folienbahnen (5e, 5f, 5g, 5h) mit Verformungen, insbesondere Noppen, mit einer Faltenwurf-ähnlichen Struktur versehen werden.

2. Verfahren nach Anspruch 1, **dadurch gekennzeichnet, dass** die übereinander liegenden, ungeprägten Folienbahnen (5a, 5b, 5c, 5d) von einem einzigen Prägewalzenpaar (1) geprägt werden.

3. Verfahren nach einem der vorhergehenden Ansprüche, **dadurch gekennzeichnet, dass** die übereinander liegenden, ungeprägten Folienbahnen (5a, 5b, 5c, 5d) mit zumindest zwei unterschiedlichen Prägungsmustern (6,7), einem ersten Prägungsmuster (6) und einem zweiten Prägungsmuster (7) geprägt werden.

4. Verfahren nach Anspruch 3, **dadurch gekennzeichnet, dass** das erste und zweite Prägungsmuster (6,7) in Förderrichtung (F) im wesentlichen gleich lang ausgestaltet ist, und dass die geprägten Folienbahnen (5e, 5f, 5g, 5h) derart entlang unterschiedlicher Wegstrecken (W, W1, W2, W3) geführt werden, dass im Stapel (9) jeweils zwei benachbart angeordnete Folienbahnen (5e, 5f, 5g, 5h) ein unterschiedliches Prägungsmuster (6,7) aufweisen.

5. Verfahren nach einem der vorhergehenden Ansprüche, **dadurch gekennzeichnet, dass** Fissuren erzeugt werden.

6. Stapel aus geprägten Folienbahnen (5e, 5f, 5g, 5h) für ein Fahrzeughitzeschild, wobei benachbarte Folienbahnen (5e, 5f, 5g, 5h) eine unterschiedliche oder eine gegenseitig parallel versetzte Prägung aufweisen, die einzelnen geprägten Folienbahnen (5e, 5f, 5g, 5h, Verformungen, insbesondere Noppen (13) aufweisen, **dadurch gekennzeichnet, dass** diese Verformungen eine Faltenwurf-ähnliche Struktur zeigen.

7. Stapel nach Anspruch 6, **dadurch gekennzeichnet, dass** die einzelnen geprägten Folienbahnen Fissuren aufweisen.

## Claims

1. Process for manufacturing a stack (9) made of embossed foil webs for a vehicle heat shield, whereby at least two unembossed foil webs (5a, 5b, 5c, 5d) are conveyed from a feed device (10) in a conveying direction (F) and are embossed, in particular knobbed, between at least one pair of embossing rollers (1), and the embossed foil webs (5e, 5f, 5g, 5h) are subsequently brought together in a stacking device (9a) to form a stack (9), whereby adjacently arranged embossed foil webs (5e, 5f, 5g, 5h) are conveyed along different conveying routes (W, W1, W2, W3) with the aid of a conveying device (8) in such a way that at least two adjacently arranged, embossed foil webs (5e, 5f, 5g, 5h) in the stack (9) are offset to each other in the conveying direction (F) due to the differences in length of the various conveying routes, **characterised in that** unembossed foil webs (5a, 5b, 5c, 5d) lying on top of each other are targetedly over-stretched during embossing in such a manner that the emboossed foil webs (5e, 5f, 5g, 5h) are provided with deformations, in particular with knobs, having a draped or folded type structure.

2. A method according to claim 1, **characterised in that** the unembossed foil webs (5a, 5b, 5c, 5d) lying over one another are embossed by a single pair of embossing rollers (1).

3. A method according to one of the above claims, **characterised in that** the unembossed foil webs (5a, 5b, 5c, 5d) lying on top of one another are embossed with at least two different embossing patterns (6, 7), a first embossing pattern (6) and a second embossing pattern (7).

4. A method according to claim 3, **characterised in that** the first and second embossing pattern (6, 7) in the conveying direction (F) are essentially structured to be of the same length, and that the embossed foil webs (5e, 5f, 5g, 5h) are guided along different length conveying routes (W, W1, W2, W3) in such a way that two foil webs (5e, 5f, 5g, 5h) which are arranged next to one another in the stack (9) have a different embossed pattern (6, 7).

5. A method according to one of the above claims, **characterised in that** fissures are created.

6. Stack made of embossed foil webs (5e, 5f, 5g, 5h) for a vehicle heat shield, whereby neighbouring foil webs (5e, 5f, 5g, 5h) have a different or a parallel offset embossed pattern, the individual embossed foil webs (5e, 5f, 5g, 5h) have deformations, in particular knobs (13), **characterised in that** these deformations have a draped or folded type structure.

7. Stack according to claim 6, **characterised in that** the individually embossed foil webs have fissures.

## Revendications

1. Procédé de fabrication d'une pile (9) composée de bandes de feuille gaufrées pour écran thermique sur un véhicule, au moins deux bandes de feuille non gaufrées (5a, 5b, 5c, 5d) étant transportées par un dispositif d'amenée (10) dans une direction de transport (F) et étant gaufrées, notamment avec des picots, entre au moins une paire de cylindres gaufreurs (1), et les bandes de feuille gaufrées (5e, 5f, 5g, 5h) étant ensuite réunies dans un dispositif d'empilage (9a) pour former une pile (9), les bandes de feuille gaufrées (5e, 5f, 5g, 5h) disposées au voisinage l'une de l'autre, étant transportées à l'aide d'un dispositif de transport (8) le long de trajets différents (W, W1, W2, W3), de telle sorte qu'au moins deux bandes de feuille gaufrées (5e, 5f, 5g, 5h), disposées au voisinage l'une de l'autre dans la pile (9), présentent un décalage mutuel dans la direction de transport (F) du fait des différences de longueur des différents trajets (W, W1, W2, W3), **caractérisé en ce que** les bandes de feuille non gaufrées (5a, 5b, 5c, 5d) situées les unes sur les autres, sont allongées excessivement de façon appropriée pendant le gaufrage, de telle sorte que les bandes de feuille gaufrées (5e, 5f, 5g, 5h) sont pourvues de déformations, notamment de picots, comprenant une structure semblable à un plissage.

2. Procédé selon la revendication 1, **caractérisé en ce que** les bandes de feuille non gaufrées (5a, 5b, 5c, 5d) situées les unes sur les autres, sont gaufrées par une seule paire de cylindres gaufreurs (1).

3. Procédé selon l'une quelconque des revendications précédentes, **caractérisé en ce que** les bandes de feuille non gaufrées (5a, 5b, 5c, 5d), situées les unes sur les autres, sont gaufrées avec au moins deux motifs de gaufrage différents (6, 7), un premier motif de gaufrage (6) et un second motif de gaufrage (7).

4. Procédé selon la revendication 3, **caractérisé en ce que** les premier et second motifs de gaufrage (6, 7) sont configurés avec sensiblement la même longueur dans la direction de transport (F), et **en ce que** les bandes de feuilles gaufrées (5e, 5f, 5g, 5h) sont guidées le long de différents trajets (W, W1, W2, W3) de telle sorte que dans la pile (9), respectivement deux bandes de feuille (5e, 5f, 5g, 5h) disposées au voisinage l'une de l'autre comprennent un motif de gaufrage (6, 7) différent.

5. Procédé selon l'une quelconque des revendications précédentes, **caractérisé en ce que** des fissures sont générées pendant le gaufrage.

6. Pile de bandes de feuille gaufrées (5e, 5f, 5g, 5h) pour écran thermique sur un véhicule, dans laquelle des bandes de feuille voisines (5e, 5f, 5g, 5h) comprennent un gaufrage différent ou décalé de façon mutuellement parallèle, les bandes de feuille gaufrées (5e, 5f, 5g, 5h) individuelles comprenant des déformations, notamment des picots (13), **caractérisé en ce que** ces déformations présentent une structure semblable à un plissage.

7. Pile selon la revendication 6, **caractérisée en ce que** les bandes de feuille gaufrées individuelles comprennent des fissures.
